Europäisches Patentamt

European Patent Office

Office européen des brevets

(11) Publication number: **0 359 482**
**A2**

# EUROPEAN PATENT APPLICATION

(21) Application number: **89309122.3**

(51) Int. Cl.⁵: **A01F 25/20**

(22) Date of filing: **08.09.89**

| | |
|---|---|
| The title of the invention has been amended (Guidelines for Examination in the EPO, A-III, 7.3). | (71) Applicant: **MONTEC SYSTEMS LTD.** **Unit 11 Sandford Lane** **Wareham Dorset BH20 4DY(GB)** |
| (30) Priority: **13.09.88 GB 8821395** | (72) Inventor: **Hayward, Richard George Montec** **Systems Limited** **Unit 11 Sandford Lane** **Wareham Dorset. BH20 4DY(GB)** |
| (43) Date of publication of application: **21.03.90 Bulletin 90/12** | |
| (84) Designated Contracting States: **AT BE DE FR GB NL SE** | (74) Representative: **Walter, Douglas Ernest et al** **HASELTINE LAKE & CO. 28, Southampton** **Buildings** **London WC2A 1AT(GB)** |

(54) **Silage cutter.**

(57) The animal feeder comprises tines (1) and a block-cutting or shearing mechanism (4) having stainless steel blades (7). The feeder is mountable on, and operable by, an agricultural tractor and is operable to cut a block of silage cleanly from a clamp or the like and to deliver it onto the movable (12) floor (13, 14, 15) of a conveyor box (8). The movable floor (13, 14, 15) delivers the silage block to a power-drivable (9) toothed (11) drum (10) which will comminute or otherwise break-up the silage block for delivery to an animal feeding location to which the tractor has been driven.

EP 0 359 482 A2

## ANIMAL FEEDER

This invention relates to the feeding of animals with silage as produced on many farms. At least three United Kingdom agricultural machinery manufacturers currently produce apparatus which is intended to cut a block of silage for consumption by animals but such a cut block has a relatively small surface area as compared with its volume and is unpalatable to most cattle, sheep and other animals to which it is presented, usually when natural grass is not available. The blocks are cut either by the use of an upwardly and downwardly movable blade or, as an alternative, by a reciprocating blade which can be somewhat complicated and liable to breakdown.

An object of the present invention is to maintain a relatively simple manner of cutting a block of silage but to avoid the unnecessarily high wastage that is associated with merely leaving that block in an untreated condition where animals can have access to it.

According to the invention, there is provided an animal feeder comprising means to cut blocks of silage from a silage source for consumption by animals, characterised in that means is provided to break-up or comminute each cut silage block, said block breaking up or comminuting means being associated with parts that are operable to deliver broken up or comminuted silage to locations accessible to animals for feeding.

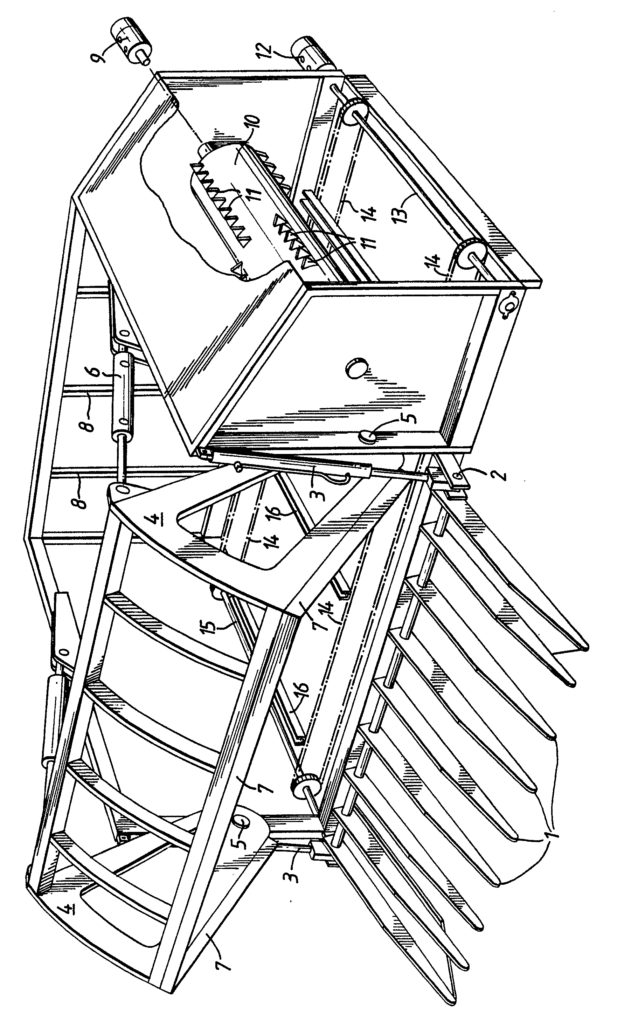

For a better understanding of the invention, and to show how the same may be carried into effect, reference will now be made, by way of example, to the accompanying drawing which is a perspective view of feeding apparatus in accordance with the invention disposed in a position in which it is ready to cut a block of silage from a clamp or the like thereof.

Referring to the accompanying drawing, the animal feeding apparatus that is illustrated therein is designed to be mounted on the rear of an agricultural tractor by means of a three point lifting device or linkage or, alternatively, at the front of such a tractor by means of a known front end loader of substantially any known type. Alternatively, an animal feeder in accordance with the invention could be mounted at the rear of an agricultural tractor using a lifting mast, operable by a hydraulic or other fluid pressure operated ram, the mast itself being attached to the tractor by way of a standard three point lifting device or linkage.

The apparatus comprises a plurality of tines 1 of which, purely for example, there may be eight. These tines 1 are turnable upwardly and downwardly through substantially 90° about substantially horizontally aligned pivots 2, the accompanying drawing showing the tines 1 in a substantially horizontal disposition. The upward and downward movement which has just been mentioned is effected by double-acting hydraulic rams or other fluid pressure-operated piston and cylinder assemblies 3. A block-cutting or shearing mechanism 4, also, is pivotable upwardly and downwardly through substantially 90° about substantially horizontally aligned pivots 5, this being effected by double-acting hydraulic rams or other fluid pressure-operated piston and cylinder assemblies 6.

When the mounted machine occupies substantially the position that is illustrated in the accompanying drawing, it is driven by the agricultural tractor to which it is connected towards the clamp or other source of silage from which the blocks are to be cut starting, of course, at the top of that clamp or the like. The tines 1 penetrate into the silage to substantially their root ends and they are then pivoted upwardly and rearwardly from the position illustrated through substantially 90° and, at the same time, the rams or other fluid-pressure operated assemblies 6 are operated to turn the cutting or shearing mechanism 4 downwardly about the pivots 5 through substantially 90°. It is noted that the mechanism 4 has three relatively perpendicular stainless steel blades 7 whose positions can be seen in the accompanying drawing. One blade 7 is parallel to the axis defined by the pivots 5 whilst the other blades 7 are perpendicular to that axis and to the first blade 7. The use of stainless steel for the blades 7 considerably lengthens their life as compared with known arrangements and prevents corrosion damage. As the cutting mechanism 4 moves upwardly through 90° about the pivots 5, the block of silage which it will have cut from the clamp or the like is moved rearwardly of the feeder as shown in the drawing and falls into a conveyor box 8. As soon as the driver or other operator of the apparatus has moved the latter to a remote location and is ready to displace the cut silage into a position in which it is accessible to animals for feeding, he switches on a hydraulic motor 9 which motor 9 directly rotates a shaft upon which is mounted a shredding drum 10. The drum 10 has rows of teeth 11 which, as illustrated, are normally triangular in shape and the rows of which extend parallel to the substantially horizontal axis about which, in use, the drum 10 is rotated.

A second hydraulic motor 12 is caused to commence rotating at, or about, the same time as is the first hydraulic motor 9 and rotates a horizontal shaft 13 carrying two spaced sprocket wheels around which two chains 14 are turnable. The chains 14 are endless chains which extends substantially horizontally into the conveyor box 8 and whose directions of rotation are reversed, at the remote end of that conveyor box 8, by further sprocket wheels mounted on a rotatable shaft 15. The two chains 14 are horizontally interconnected by channel-shaped slats 16, these slats 16 thus affording a movable floor for both the conveyor box 8 and the box at the side of the machine in which the toothed shredding drum 10 is located. The various hydraulic motors 9 and 12 and rams or the like 3 and 6 are controlled in a conventional way by a bank of spool valves that can be operated by levers accessible to the driver or other operator of the tractor upon which the animal feeder is mounted or, alternatively, they can be operated from remote locations by solenoid valves. It is noted that, in order to avoid unnecessary complication of the accompanying drawing, the hydraulic connections of the hydraulic motors and rams or the like to the tractor are omitted.

It will be apparent that, by use of the animal feeder that has been described, blocks of silage can be cut in a clean manner from a clamp or other source thereof, leaving a very clean cut silage face which is considerably less prone to secondary fermentation than is a badly indented or broken-up silage face. When a block has been cut, it can be transported immediately to a location at which animals are to feed, the location possibly being outdoors or in a cattle shed or the like at one side of an internal passageway thereof. As soon as the location in question has been reached, the motors 9 and 12 are turned on and the chains 14 move the block of silage to the right as seen in the drawings where the teeth 11 of the shredding drum 10, which preferably rotates in the opposite direction to the shafts 13 and 15, tears or teases out silage from the block, depositing it on the ground or in a feeding trough at the right-hand side of the drum 10 and a shaft 13 as seen in the drawing. The silage is thus presented for feeding without separate handling and is considerably more palatable to cattle, sheep and other animals than it is when left in blocks. This significantly reduces wastage and greatly increases the available surface area of the feed so that "timid" animals, who sometimes miss out to a large extent under conventional circumstances, can still get their share along with the "bullies" who sometimes overeat, damaging their own progress as well as reducing the food available to other animals.

Provided that the feeding location is not too far distant from the clamp or other source of silage, the whole operation from cutting to depositing the silage at the feeding location can take no more than a maximum of about 5 minutes.

## Claims

1. An animal feeder comprising means (6, 7) to cut blocks of silage from a silage source for consumption by animals, characterised in that means (10, 11) is provided to break-up or comminute each cut silage block, said block breaking up or comminuting means (10, 11) being associated with parts (13, 14, 15) that are operable to deliver broken up or comminuted silage to locations accessible to animals for feeding.

2. An animal feeder according to claim 1, characterised in that said means (6, 7) to cut blocks of silage from a silage source includes cutting blades (7) formed from stainless steel.

3. An animal feeder according to claim 1 or 2, characterised in that means is provided to displace cut blocks of silage into a conveyor box (8) of the apparatus, said means comprising a plurality of tines (1) that are movable between positions which, in use, are substantially horizontally and substantially vertically disposed.

4. An animal feeder according to any preceding claim, characterised in that the block breaking up or comminuting means (10, 11) comprises a toothed (11) shredding drum (10).

5. An animal feeder according to claim 4, characterised in that said toothed (11) drum (10) is carried by a rotatable shaft arranged to be rotated by a motor (9) in a direction which is such that the teeth (11) will be moving, during operation, in a direction substantially opposite to the direction in which a block of silage to be broken up or comminuted thereby meets those teeth (11).

6. An animal feeder according to claim 3 or to either of claims 4 or 5 when read as appendant to claim 3, characterised in that the conveyor box (8) has a movable floor that is operable to displace any silage block which it receives towards the block breaking up or comminuting means (10, 11), said movable floor comprising slats (16) interconnecting chains (14).

7. An animal feeder according to claim 3 or in any one of claims 4 to 6 when read as appendant to claim 3, characterised in that the block breaking up or comminuting means (10, 11) is located in a box at one side of the conveyor box (8) of the feeder.

8. An animal feeder according to claim 3 or in any one of claims 4 to 7 when read as appendant to claim 3, characterised in that the parts arranged (6, 7) to cut blocks of silage from a silage source and said tines (1) are independently turnable upwardly and downwardly about corresponding axes by corresponding hydraulic piston and cylinder assemblies (6, 3).

9. An animal feeder according to any preceding claim, characterised in that it is designed to be mounted on the rear of an agricultural tractor by means of a three point lifting device or hitch or at the front of such a tractor by means of a front-end loader.

10. An animal feeder according to claim 4 or to any one of claims 5 to 9 when read as appendant to claim 4, characterised in that said teeth (11) are substantially triangular in shape and that they are arranged in rows which extend substantially parallel to the axes about which, during operation, the shredding drum (10) upon which they are mounted is rotated.